# FASCICULE DE BREVET EUROPEEN

(11) **EP 1 893 899 B1**
(45) Date de publication et mention de la délivrance du brevet: **26.11.2008**
(21) Numéro de dépôt: 06755490.7
(22) Date de dépôt: 17.05.2006
(51) Int. Cl.: F16K 21/04

(54) **DISPOSITIF POUR INTERROMPRE LA TEMPORISATION D'UN ROBINET A FERMETURE TEMPORISEE**
VORRICHTUNG ZUR UNTERBRECHUNG DER VERZÖGERUNG EINES VENTILS MIT VERZÖGERTER SCHLIESSUNG
DEVICE FOR INTERRUPTING DELAY OF A DELAYED CLOSING VALVE

(30) Priorité: 27.05.2005 FR 0505343
(43) Date de publication de la demande: 05.03.2008
(73) Titulaire: Les Robinets Presto, 92120 Montrouge (FR)
(72) Inventeur: DUTHEIL, Daniel, F-17132 Meschers (FR)
(74) Mandataire: Vander-Heym, Serge Henri Marcel
(86) Numéro de dépôt international: PCT/FR2006/001104
(87) Numéro de publication internationale: WO 2006/125886

(56) Documents cités:
- GB-A- 421 600
- US-A- 4 630 644
- US-A- 4 676 477
- US-A- 6 041 809

## Description

La présente invention est relative à un dispositif pour interrompre la temporisation d'un robinet à fermeture temporisée.

Un tel robinet comporte une chambre de temporisation dans laquelle peut se déplacer un piston lié en translation au clapet du robinet, ladite chambre communiquant avec l'arrivée d'eau par l'entremise d'un orifice calibré.

Une solution pour ouvrir le robinet consiste à mettre la chambre de temporisation à l'air libre. Un tel dispositif est décrit, notamment, dans le brevet français n°2492942. Dans ce document, le moyen utilisé consiste à relier la chambre de temporisation à l'entrée d'un robinet à poussoir dont la sortie débouche à l'air libre, ce dispositif offrant l'avantage de permettre la commande à distance du robinet temporisé principal. Dans tout ce qui va suivre, l'expression « robinet à poussoir » sous-entend qu'il s'agit d'un robinet pouvant être ouvert par l'enfoncement du poussoir et dont la fermeture est temporisée.

Dans le cas du document précité, la temporisation du robinet à poussoir est définie de façon à permettre la vidange de la chambre de temporisation du robinet principal, ce temps est court.

Le temps pendant lequel l'eau s'écoule du robinet principal dépend uniquement du réglage de la temporisation du robinet principal. Ce réglage est, généralement effectué en usine (choix du ressort de rappel, section de l'orifice calibré, course du piston) et l'usager ne peut pas le modifier.

L'expérience a montré qu'il était parfois souhaitable que l'usager puisse interrompre l'écoulement de l'eau de façon quasi instantanée, notamment, dans le cas d'une installation de douche pour permettre à l'usager une opération de savonnage par exemple.

Selon l'invention, l'arrivée d'eau et la chambre de temporisation du robinet principal sont reliées par une canalisation sur laquelle est interposé un moyen d'obturation.

Selon un mode de réalisation, ce moyen d'obturation est constitué par un second robinet à poussoir dont l'entrée est reliée à l'arrivée d'eau et dont la sortie est reliée à la chambre de temporisation du robinet principal.

De cette façon, par une brève action sur le poussoir de ce robinet, on applique toute la pression du réseau sur le piston du robinet principal qui est vivement repoussé contre son siège interrompant, ainsi, l'écoulement d'eau. Cet écoulement peut être repris par une action sur le poussoir du robinet à poussoir usuel.

La présente invention sera mieux comprise par la description qui va suivre faite en se référant aux dessins annexés à titre d'exemple indicatif, seulement, sur lesquels :
- la figure 1 est une vue schématique d'une installation conforme à l'invention, tous les robinets étant fermés ;
- la figure 2 est une vue analogue à celle 1, l'installation étant en fonctionnement ;
- la figure 2a montre la position des organes mobiles du second robinet à poussoir lors de l'interruption de la temporisation ;

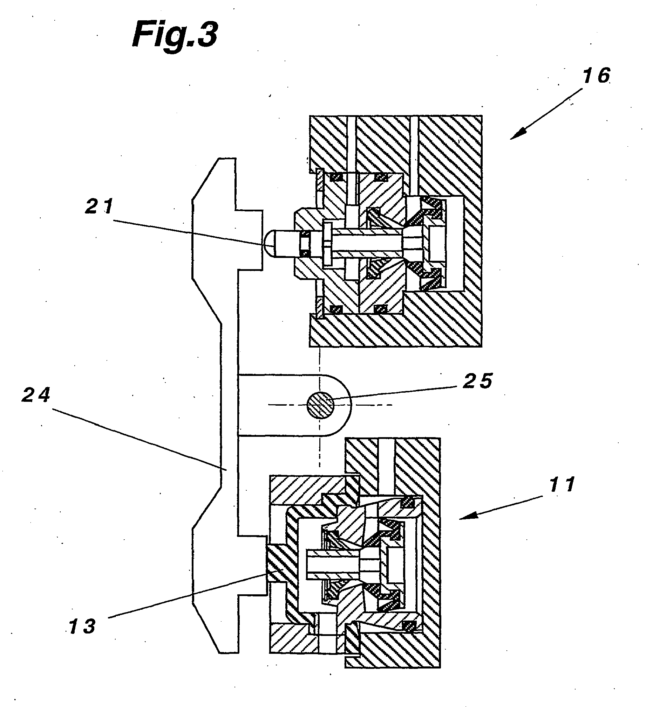

- la figure 3 est une vue montrant un moyen de commande des deux robinets à poussoir.

En se reportant aux dessins et selon un mode de réalisation, on voit que l'invention est appliquée à une installation de douche comportant une pomme de douche 1 dont le fonctionnement est contrôlé par un robinet temporisé 2 d'un type connu comportant une arrivée d'eau 3 séparée de la sortie 4 par un siège 5 normalement obturé par un clapet 6 porté par un piston 7 mobile dans une chambre de temporisation 8.

De la façon connue, la chambre est reliée, par une canalisation 9 à l'entrée 10 d'un robinet à poussoir 11, dont la sortie 12 est reliée à l'air libre De préférence, le robinet 11 est un robinet de sécurité, c'est-à-dire un robinet pour lequel une action prolongée sur le poussoir est sans influence sur le début de la temporisation. Un tel robinet est décrit dans le brevet français précité.

Selon un mode de réalisation, le robinet 11 est identique à celui décrit dans le brevet français N°2773601 et l'on pourra se reporter à ce document pour mieux comprendre le fonctionnement de ce dernier et ses avantages.

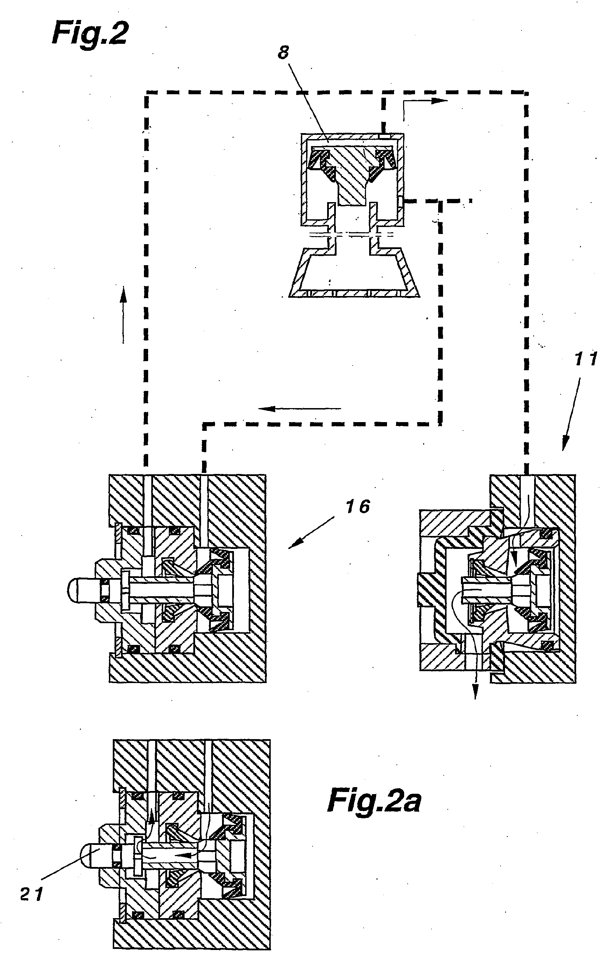

Par une action sur la membrane 13, on repousse le piston 14 et l'eau contenue dans la chambre de temporisation 8 s'écoule en empruntant le trajet montré par les flèches de la figure 2. Il est nécessaire de relâcher l'action sur la membrane 13 pour que l'eau traverse la queue tubulaire 15 du piston 14, provoquant la vidange de la chambre 8.

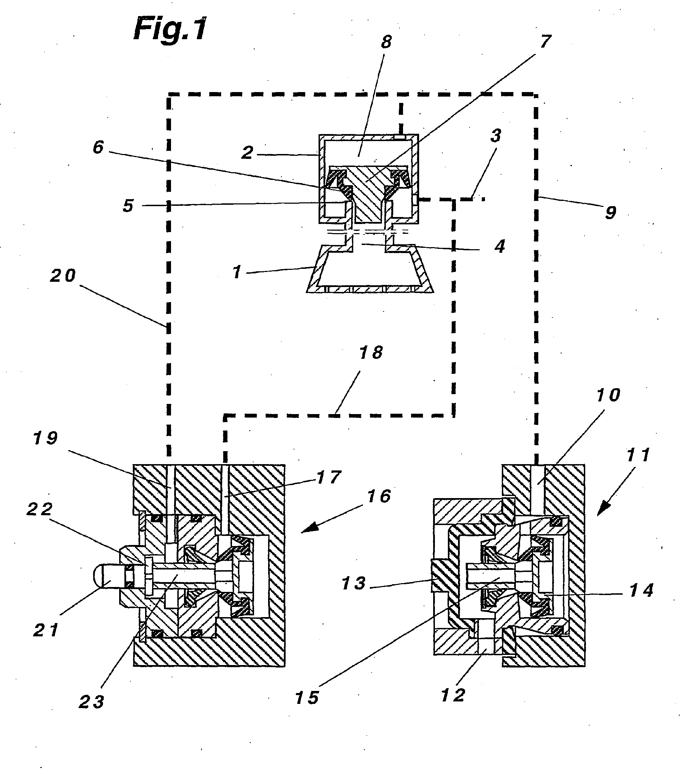

De la façon connue, le temps d'ouverture du robinet 11 est déterminé par le tarage du ressort de rappel usuel (non représenté) et par la section de l'encoche (non représentée) prévue sur la jupe du piston (à ce sujet on peut se reporter au brevet français N°2773601). Ce temps est celui nécessaire pour permettre à la pression du réseau de repousser le piston 7 de la position montrée sur la figure 1 à celle représentée sur la figure 2.

Dans certain cas, l'utilisateur à intérêt à arrêter l'écoulement de l'eau avant la fin du temps de temporisation.

Selon l'invention, ce résultat est obtenu en utilisant un second robinet à poussoir 16 dont l'entrée 17 est reliée par une canalisation 18 à l'arrivée d'eau 3 et dont la sortie 19 est reliée par une canalisation 20 à la chambre de temporisation 8 du robinet principal 2.

Les robinets 11 et 16 peuvent être de conception quasi identique étant toutefois fait observer que la membrane 13 élastiquement déformable est remplacée par un poussoir 21, rigide, dont la tête 22 n'obture pas la queue tubulaire 23 du piston.

En enfonçant le poussoir 21 (fig.2a), l'usager ouvre le robinet 16 et applique la pression du réseau dans la chambre 8, ce qui a pour effet de repousser, quasi instantanément, le piston 7 et d'arrêter l'écoulement de l'eau. Le robinet 16 est temporisé avec un temps court suffisant pour remplir la chambre 8, même si l'appui sur le poussoir 21 est très bref.

Il ressort des explications ci-dessus que les robinets 11 et 16 ont des fonctions distinctes et qu'il convient de na pas les actionner en même temps ou à mauvais escient.

Selon l'invention, les robinets 11 et 16 sont groupés sur une platine (non représentée) et les poussoirs 13 et 21 sont dissimulés sous un pressoir à bascule 24, articulé par un axe 25, situé entre ses extrémités, sur ladite platine. De cette façon, une pression sur l'une ou l'autre des extrémités du pressoir 24 permet d'actionner l'un ou l'autre des robinets. Un actionnement simultané des deux robinets est impossible.

La platine précitée peut supporter le robinet 2 et l'ensemble peut être recouvert par un capot dissimulant les différentes canalisations.

Il ressort des explications ci-dessus que l'invention à été expliquée en référence à un dispositif comportant un dispositif de commande à distance faisant appel à un robinet 11 de décharge, mais l'invention peut s'appliquer à un robinet temporisé classique selon lequel le déplacement du piston 7 est commandé, par exemple, par un poussoir ou un détecteur de présence et, d'une façon générale, à tous dispositif comportant une robinet à chambre de temporisation.

## Revendications

1. Dispositif pour interrompre la temporisation d'un robinet temporisé du genre de ceux comportant une chambre de temporisation (8) comportant un piston mobile ( 7) dont le déplacement est susceptible d'obturer ou de dégager le siège (5) interposé entre l'arrivée d'eau et la sortie, **caractérisé en ce qu'**une canalisation (18-20), sur laquelle est interposé un moyen d'obturation, relie l'arrivée d'eau (3) à la chambre de temporisation (8).

2. Dispositif selon la revendication 1, **caractérisé en ce que** le moyen précité est constitué par un robinet à poussoir (16) dont l'entrée est reliée à l'arrivée d'eau (3) et dont la sortie est reliée à la chambre de temporisation (8).

3. Dispositif selon la revendication 2 comportant un robinet à poussoir (11) permettant, lorsqu'il est actionné, de commander la vidange de la chambre de temporisation (8) et de permettre le début de la temporisation du robinet principal, **caractérisé en ce que** les deux robinets à poussoir (16 et 11) sont regroupés sur une platine sur laquelle s'articule, par sa partie médiane, un pressoir (24) dont chacune des extrémités recouvre celle correspondante d'un robinet, une pression sur l'une ou l'autre des extrémités de cet organe permettant, selon le cas, d'ouvrir le robinet principal et de démarrer la temporisation ou de l'interrompre en provoquant sa fermeture.

## Claims

1. A device for interrupting the delay of a delayed closing valve of the type comprising a delaying chamber (8) including a mobile piston (7) whereof the movement is capable of closing or releasing the seat (5) interposed between the water inlet and exit **characterized in that** a pipe (18-20), whereon is interposed a closure means, connects the water inlet (3) to the delaying chamber (8).

2. A device according to claim 1, **characterized in that** the above-mentioned means is composed of a self-closing faucet (16) whereof the inlet is connected to the water inlet (3) and whereof the outlet is connected to the delaying chamber (8).

3. A device according to claim 2, including a self-closing faucet (11) making it possible, when it is activated, to control the emptying of the delaying chamber (8) and to allow the starting of the delay of the main valve, **characterized in that** both self-closing faucets (16 and 11) are grouped on a base plate, whereon a push button (24) is articulated by the median part thereof, each end of the push button covering the corresponding one of a faucet, and a pressure on either end of such element making it possible to open the main valve and to start the delay or to interrupt it by causing the valve to close.

## Patentansprüche

1. Vorrichtung für die Unterbrechung der Verzögerung eines verzögerten Hahns von der Art, die eine Verzögerungskammer (8) umfassen, die einen beweglichen Kolben (7) umfaßt, dessen Verschiebung den Sitz (5) verschließt oder freigibt, der sich zwischen dem Wassereinlaß und dem Wasseraustritt befindet, **dadurch gekennzeichnet, daß** eine Kanalisierung (18 - 20), auf der ein Verschlußmittel eingesetzt ist, den Wassereintritt (3) mit der Verzögerungskammer (8) verbindet.

2. Vorrichtung nach Anspruch 1, **dadurch gekennzeichnet, daß** das vorgenannte Mittel aus einem Stößelhahn (16) gebildet wird, dessen Eingang mit dem Wassereinlaß (3) verbunden ist, und dessen Austritt mit der Verzögerungskammer (8) verbunden ist.

3. Vorrichtung nach Anspruch 2, die einen Stößelhahn (11) umfaßt, mit dessen Betätigung das Entleeren der Verzögerungskammer (8) und der Beginn der Verzögerung des Haupthahns gesteuert werden können, **dadurch gekennzeichnet, daß** die beiden Stößelhähne (16 und 11) auf einer Platine zusammengefaßt sind, auf der eine Presse (24) mit ihrem mittleren Teil gelenkig angebracht ist, deren jeweiliges Ende das entsprechende Ende eines Hahns abdeckt, wobei mit Druck auf das eine oder andere Ende dieses Organs der Haupthahn je nach Fall geöffnet und die Verzögerung gestartet oder unterbrochen werden kann, indem sein Verschluß ausgelöst wird.
